# EUROPÄISCHE PATENTSCHRIFT

(11) **EP 2 364 483 B1**
(45) Veröffentlichungstag und Bekanntmachung des Hinweises auf die Patenterteilung: **27.03.2013**
(21) Anmeldenummer: 09784072.2
(22) Anmeldetag: 03.12.2009
(51) Int. Cl.: G06K 7/08

(54) **VORRICHTUNG UND VERFAHREN ZUM IDENTIFIZIEREN UND/ODER MARKIEREN VON OBJEKTEN MITTELS RFID**
DEVICE AND METHOF FOR IDENTIFYING AND/OR MARKING OF OBJECTS WITH RFID
APPAREIL ET PROCÉDÉ POUR IDENTIFIER ET/OU MARQUER D'OBJETS PAR RFID

(30) Priorität: 03.12.2008 DE 102008060145
(43) Veröffentlichungstag der Anmeldung: 14.09.2011
(73) Patentinhaber: Felix Schoeller Supply Chain Technologies GmbH & Co. KG, 49066 Osnabrück (DE)
(72) Erfinder: Rademacher, Horst, 49179 Ostercappeln (DE)
(74) Vertreter: Cohausz & Florack
(86) Internationale Anmeldenummer: PCT/EP2009/066347
(87) Internationale Veröffentlichungsnummer: WO 2010/063799

(56) Entgegenhaltungen:
- WO-A2-2008/013846
- US-A1- 2004 070 503
- US-A1- 2005 043 854

## Beschreibung

Die Erfindung betrifft eine Vorrichtung zum Identifizieren und/oder Markieren von Objekten mittels RFID mit einer Lese-oder Schreib-/Leseeinheit zum drahtlosen Auslesen und/oder Beschreiben einer Speichereinheit eines mit dem zu identifizierenden und/oder zu markierenden Objekt verbundenen RFID-Transponders, wobei die wenigstens eine Lese- oder Schreib-/Leseeinheit ein wenigstens eine Antenne aufweisendes Sende-/Empfangsmodul umfasst. Ferner betrifft die Erfindung ein Verfahren zum Identifizieren und/oder Markieren eines Objekts mittels RFID.

RFID-Verfahren (Radio-Frequency-Identification) sind aus dem Stand der Technik seit Jahren bekannt. Es handelt sich dabei um Verfahren zur automatischen Identifikation von Gegenständen oder Lebewesen, bei denen ein Lesegerät über ein elektromagnetisches Hochfrequenzfeld geringer Reichweite mit dem mit dem zu identifizierenden Objekt verbundenen RFID-Transponder eine drahtlose Verbindung aufbaut, wobei die Energie des Hochfrequenzfelds in dem RFID-Transponder zum Auslesen eines in dem Transponder enthaltenen Chips genutzt wird, was zu einer Feldschwächung führt. Der RFID-Transponder reflektiert sodann das eingestrahlte Hochfrequenzfeld, wobei die aus dem Speicher des RFID-Transponders ausgelesene, das Objekt identifizierende Information auf das reflektierte Signal aufmoduliert wird. Das modulierte Signal wird durch das Lesegerät über dessen Sende-/Empfangsmodul sodann erfasst und verarbeitet, beispielsweise an ein EDV-Gerät weitergeleitet, wodurch der Identifikationsvorgang abgeschlossen ist.

RFID-Verfahren werden in der produzierenden Industrie ebenso wie im Handel in vielfältiger Weise eingesetzt. Die dabei verwendeten Vorrichtungen ermöglichen neben der Identifikation von Objekten teilweise auch das Markieren derselben, d.h. das Beschreiben des in dem RFID-Transponder enthaltenen Speichers, um beispielsweise im Zuge eines Produktionsprozesses geänderte Eigenschaften, wie z.B. sein Gewicht, des mit dem RFID-Transponder versehenen Objekts in diesem abzuspeichern.

In der Papierindustrie besteht die Aufgabe, dass mit einer Papierbahn bewickelte und mit einem RFID-Transponder versehene Hülsen mittels RFID identifiziert und an verschiedenen Stellen im Zuge der Produktion und Auslieferung auch neu markiert werden müssen, wobei das Markieren das Neubeschreiben des Speichers erfordert. Hierbei erweist es sich als Problem, dass das Markieren des in die Hülse eingearbeiteten RFID-Transponders deutlich mehr Energie benötigt als das einfache Auslesen. Da aus Kostengründen regelmäßig passive RFID-Transponder, die über keine eigene Energiequelle verfügen, eingesetzt werden, reicht die durch das Hochfrequenzfeld zur Verfügung gestellte Energie am Ort des RFID-Transponders infolge der starken Dämpfung des auf die Hülse aufgewickelten Papiers oftmals nicht aus, um einen zuverlässigen Markiervorgang sicherzustellen.

Bei einer aus der Praxis bekannten Lösung sind insgesamt drei Antennen des Sende-/Empfangsmoduls einer Schreib-/Leseeinheit an einem portalähnlichen Gerüst montiert, wobei jeweils eine Antenne an den beiden vertikalen Stützen montiert und in Richtung des durch das Gerüst definierten Durchgangs ausgerichtet ist, während eine weitere Antenne von einem oberen horizontalen Gerüstabschnitt nach unten in Richtung des Durchgangs ausgerichtet ist. Mit dieser Antennenkonfiguration, bei der die durch das Gerüst entweder im aufrechten oder quer zur Transportrichtung liegenden Zustand hindurchtransportierten Papierrollen mit einer ihrer Stirnseiten stets auf eine der Antennen hin ausgerichtet sind, lassen sich Identifikationsvorgänge, d.h. das reine Auslesen des Speichers des RFID-Transponders zum Zwecke der Identifikation der mit dem RFID-Transponder versehenen Papierrolle, mit ausreichender Betriebssicherheit durchführen. Aufgrund der Dämpfung durch die aufgewickelte Papierbahn können jedoch die Markiervorgänge nur mit geringer Zuverlässigkeit ausgeführt werden, so dass es oftmals erforderlich ist, den Transport der betreffenden Papierrolle anzuhalten, um den Markiervorgang zu wiederholen bis ein valide Markierung erfolgt ist.

US 2005/043854-A1 ; WO 2008/013846-A2 ; US 2004/070503-A1 beschreiben die Bezeichnung des Gegenstands des Anspruchs 1 und gehören damit zum Stand der Technik.

Ausgehend hiervon liegt der Erfindung die Aufgabe zugrunde, eine Vorrichtung zum Identifizieren und/oder Markieren von Objekten mittels RFID anzugeben, die ein Auslesen und Beschreiben der Speichereinheit des RFID-Transponders mit deutlich verbesserter Zuverlässigkeit ermöglicht.

Die Aufgabe wird erfindungsgemäß mit einer Vorrichtung zum Identifizieren und/oder Markieren von Objekten mittels RFID nach dem Oberbegriff des Patentanspruches 1 dadurch gelöst.

Erfindungsgemäß weist die Vorrichtung zum Identifizieren und/oder Markieren von Objekten mittels RFID eine Lese- oder Schreib-/Leseeinheit zum drahtlosen Auslesen und/oder Beschreiben einer Speichereinheit eines mit dem zu identifizierenden und/oder zu markierenden Objekt verbundenen RFID-Transponders auf. Ob eine reine Leseeinheit oder eine kombinierte Schreib-Leseeinheit vorgesehen ist, richtet sich nach dem jeweiligen Anwendungsfall, d.h. ob die Vorrichtung zum reinen Identifizieren (Auslesen des Speichers des RFID-Transponders) von Objekten oder für ein Identifizieren und Markieren (Auslesen und Neubeschreiben des Speichers des RFID-Transponders) vorgesehen ist. Die Lese- oder Schreib-/Leseeinheit umfasst ferner ein wenigstens eine Antenne aufweisendes Sende-/Empfangsmodul. Hierdurch wird die drahtlose Kommunikation mit dem RFID-Transponder, die das Aussenden der Abfrage und das Empfangen der durch den RFID-Transponder modulierten Antwort umfasst, ermöglicht.

Durch eine bewegliche Anordnung der wenigstens einen Antenne wird in vorteilhafter Weise erreicht, dass die relative Ausrichtung der Antenne zu dem mit dem RFID-Transponder versehenen Objekt während des Identifizierungs- oder Markierungsvorgangs über einen weiten Bereich variiert werden kann, so dass die Antenne wenigstens zu einem Zeitpunkt eine Position einnimmt, in der die in die Antenne des RFID-Transponders eingekoppelte Energie trotz etwaiger Dämpfung durch das mit dem RFID-Transponder versehene Objekt selbst ausreicht, um auch eine Markierung des Objekts, d.h. ein Beschreiben der Speichereinheit des RFID-Transponders, mit hoher Betriebssicherheit durchzuführen. Gleiches gilt selbstverständlich auch für das Identifizieren des Objekts, d.h. für das reine Auslesen des Speicherinhalts des RFID-Transponders.

Die bewegliche Anordnung der wenigstens einen Antenne des Sende-/Empfangsmoduls der erfindungsgemäßen Vorrichtung kann auf verschiedene Weise realisiert sein. So ist es möglich, die Antenne derart anzuordnen, dass sie rotativ beweglich ist. Ebenfalls ist es möglich, eine translatorische Beweglichkeit der Antenne vorzusehen.

Üblicherweise sind die bei RFID-Systemen eingesetzten Antennen nicht stabförmig, sondern flächig ausgebildet und weisen somit eine Abstrahlfläche auf. Nach einer weiteren vorteilhaften Ausgestaltung der Erfindung ist vorgesehen, dass die wenigstens eine Antenne um eine im Wesentlichen senkrecht zur Abstrahlfläche stehende Rotationsachse rotativ beweglich ist. Ebenso kann vorgesehen sein, dass die wenigstens eine Antenne um eine im Wesentlichen parallel zur Abstrahlfläche liegende Rotationsachse rotativ beweglich ist. Ferner sind auch überlagerte rotative Bewegungen um verschiedene Rotationsachsen möglich.

Neben einer rotativen Beweglichkeit kann ferner vorgesehen sein, dass die wenigstens eine Antenne translationsbeweglich angeordnet ist. Eine Translationsbewegung kann beispielsweise entlang einer im Wesentlichen parallel zu einer Abstrahlfläche der wenigstens einen Antenne liegenden Achse erfolgen. Ferner kann vorgesehen sein, dass die wenigstens eine Antenne gleichzeitig rotativ und translationsbeweglich angeordnet ist, um eine maximale Variabilität hinsichtlich ihrer relativen Position zu dem zu identifizierenden und/oder zu markierenden Objekt zu ermöglichen.

Nach einer weiteren Ausgestaltung der Erfindung umfasst die Vorrichtung Mittel zur Detektion eines zu markierenden und/oder zu identifizierenden Objekts, wobei die Mittel mit der Lese- oder Schreib-/Leseeinheit derart gekoppelt sind, dass bei Detektion eines Objekts die Lese- oder Schreib-/Leseeinheit aktiviert wird. Durch Einsatz derartiger Detektionsmittel ist sichergestellt, dass die verschiedenen Komponenten der Vorrichtung nur dann aktiviert werden, wenn sich ein zu identifizierendes und/oder zu markierendes Objekt in unmittelbarer Nähe der Vorrichtung befindet und somit ein Identifizierungs- oder Markierungsvorgang infolge der beschränkten Reichweite überhaupt möglich ist. Ist dies nicht der Fall, so bleiben die Komponenten deaktiviert, wodurch deren Lebensdauer erhöht und Energie eingespart wird. Konkret können die Detektionsmittel beispielsweise als Lichtschrankenanordnung ausgebildet sein.

Nach einer weiteren Ausgestaltung der Erfindung umfasst die Vorrichtung eine Antriebseinheit zur Bewegung der wenigstens einen Antenne. Durch eine solche Antriebseinheit, die beispielsweise als Elektromotor mit vorgeschaltetem Getriebe ausgebildet sein kann, kann die wenigstens eine Antenne in der gewünschten Weise rotativ und/oder translatorisch bewegt werden. Schaltungstechnisch können die Antriebseinheit zur Bewegung der wenigstens einen Antenne und die Lese- oder Schreib-/Leseeinheit derart gekoppelt sein, dass bei Aktivierung der Lese- oder Schreib-/Leseeinheit die Antriebseinheit zur Erzeugung der Bewegung der wenigstens einen Antenne ebenfalls aktiviert wird. Eine derartige Kopplung hat den Vorteil, dass im Betrieb der Vorrichtung die Antennenbewegung nur dann ausgeführt wird, wenn ein Identifizierungs- oder Markierungsvorgang erfolgt.

Nach einer weiteren Ausgestaltung der Erfindung kann die Vorrichtung eine Positioniereinheit zur Positionierung der wenigstens einen Antenne in der Bewegungsbahn eines zu identifizierenden und/oder zu markierenden Objektes umfassen. Dadurch, dass die wenigstens eine Antenne direkt in der Bewegungsbahn des zu identifizierenden und/oder zu markierenden Objektes positioniert werden kann, ist eine optimale Ausrichtung der Antenne relativ zu dem RFID-Transponder des Objektes möglich, so dass die Zuverlässigkeit des Identifizierungs- oder Markierungsvorganges noch weiter gesteigert wird. Praktisch lässt sich eine solche Positioniereinheit beispielsweise als ein translatorisch in der Bewegungsbahn des Objektes verschiebbarer Ausleger realisieren, wobei an dem freien Ende des Auslegers die wenigstens eine Antenne angeordnet ist. Ist neben der wenigstens einen Antenne eine Antriebseinheit zur Bewegung der Antenne vorgesehen, so befindet sich diese bevorzugt ebenfalls an dem freien Ende des Auslegers, um den konstruktiven Aufwand zu minimieren.

Nach einer weiteren Ausgestaltung der Erfindung ist die Positioniereinheit als Rahmenkonstruktion mit wenigstens einem innerhalb der Rahmenkonstruktion und in die Bewegungsbahn eines zu identifizierenden und/oder zu markierenden Objekts bewegbaren Segment ausgebildet, wobei die wenigstens eine Antenne an dem Segment angeordnet ist. Die Bewegungsbahn des Objektes, beispielsweise eine Förderstrecke für eine Papierrolle, und der Rahmen der Positioniereinheit sind dabei bevorzugt derart relativ zueinander ausgerichtet sein, dass das Objekt durch den Rahmen hindurch bewegt wird. Nähert sich das zu identifizierende und/oder zu markierende Objekt dem Rahmen, so wird das Segment in dem Rahmen vorteilhafterweise vertikal aufwärts und/oder vertikal abwärts bewegt, um eine Antennenbewegung zu bewirken.

Nach einer weitergehenden Ausgestaltung ist die wenigstens eine Antenne gemeinsam mit einer Antriebseinheit in einem inneren Volumen des Segments angeordnet, wobei die Antriebseinheit ausgebildet ist, um eine Rotation der wenigstens einen Antenne zu bewirken. Hierdurch wird neben der Aufwärts- und Abwärtsbewegung ein weiterer Bewegungsfreiheitsgrad, nämlich eine Rotation, ausgenutzt, wodurch sich die Betriebssicherheit des Identifizierungs- oder Markierungsvorgangs weiter erhöhen lässt.

Nach einer weiteren besonders vorteilhaften Ausgestaltung der Erfindung ist vorgesehen, dass die wenigstens eine Antenne derart in der Förderstrecke eines zu identifizierenden und/oder zu markierenden Objektes angeordnet ist, dass die Antennenbewegung durch das bewegte Objekt selbst erzeugbar ist. Dies hat den besonderen Vorteil, dass keine gesonderte Antriebseinheit vorhanden sein muss, da die Antennenbewegung relativ zu dem Objekt durch die Bewegung des Objektes selbst unmittelbar induziert werden kann. Praktisch lässt sich dies beispielsweise dadurch realisieren, dass die wenigstens eine Antenne derart schwenkbar angeordnet ist, dass sie durch das zu identifizierende und/oder zu markierende Objekt aus dessen Förderstrecke nach Art einer Schwingtür herausschwenkbar ist. Dazu kann die wenigstens eine Antenne beispielsweise auf einer in der Förderstrecke des Objektes positionierten verschwenkbaren Platte angeordnet sein.

Um die Ausfallsicherheit der Vorrichtung weiter zu steigern, kann vorgesehen sein, dass sie zur Identifizierung eines Objektes zusätzlich einen Barcode-Scanner aufweist. Dieser kann dann eingesetzt werden, falls das RFID-System eine Störung aufweist.

Die eingangs genannte Aufgabe wird auch durch ein Verfahren zum Identifizieren und/oder Markieren eines Objektes mittels RFID unter Verwendung einer Vorrichtung nach einem der Ansprüche 1 bis 18 gelöst, wobei das Verfahren durch folgende Schritte gekennzeichnet ist:
- Aktivieren der Lese- oder Schreib-Leseeinheit bei Annäherung eines zu identifizierenden und/oder zu markierenden Objekts,
- Bewegen der wenigstens einen Antenne und gleichzeitiges Identifizieren und/oder Markieren des Objekts durch Auslesen und/oder Beschreiben der Speichereinheit des RFID-Transponders,
- wobei Mittel zur Detektion eines zu Identifizierenden und/oder markierenden objekts vorgesehen sind und mit der Lese- oder Schreib-/Leseeinheit derart gekoppelt sind, dass bei Detektion eines objekts die Lese- oder Schreib- /Leseeinheit aktiviert wird.

Für die Vorteile des Verfahrens gilt das vorstehend Gesagte in analoger Weise.

Im Zuge des erfindungsgemäßen Verfahrens kann die wenigstens eine Antenne durch eine Antriebseinheit bewegt werden. Ebenso ist es jedoch auch möglich, dass die Bewegung der Antenne durch einen Maschinenbediener, welcher die Antenne führt und relativ zu dem zu identifizierenden und/oder zu markierenden Objekt bewegt, bewirkt wird. Ferner kann vorgesehen sein, dass die wenigstens eine Antenne durch das zu identifizierende und/oder zu markierende Objekt selbst bewegt wird.

Im Folgenden wird die Erfindung anhand einer Ausführungsbeispiele darstellenden Zeichnung näher erläutert. Es zeigen:
- Fig. 1: eine aus dem Stand der Technik bekannte Vorrichtung zum Identifizieren und Markieren von Papierrollen mittels RFID im Blockschaltbild,
- Fig. 2: eine aus dem Stand der Technik bekannte Vorrichtung zum Identifizieren von Papierrollen mittels RFID in perspektivischer, teilweise schematisierter Ansicht,
- Fig. 3a,b: eine Vorrichtung zum Identifizieren und/oder Markieren von Papierrollen mittels RFID mit zwei unterschiedlichen Antennenkonfigurationen in perspektivischer Ansicht,
- Fig. 4: eine Vorrichtung zum Identifizieren und/oder Markieren von Papierrollen mittels RFID in einer ersten Ausführungsform in perspektivischer Ansicht,
- Fig. 5: eine Vorrichtung zum Identifizieren und/oder Markieren von Papierrollen mittels RFID in einer zweiten Ausführungsform in perspektivischer Ansicht,
- Fig. 6a,b: eine Vorrichtung zum Identifizieren und/oder Markieren von Papierrollen mittels RFID in einer dritten Ausführungsform in perspektivischer Ansicht und
- Fig. 7a,b: eine Vorrichtung zum Identifizieren und/oder Markieren von Papierrollen mittels RFID in einer vierten Ausführungsform in perspektivischer Ansicht.

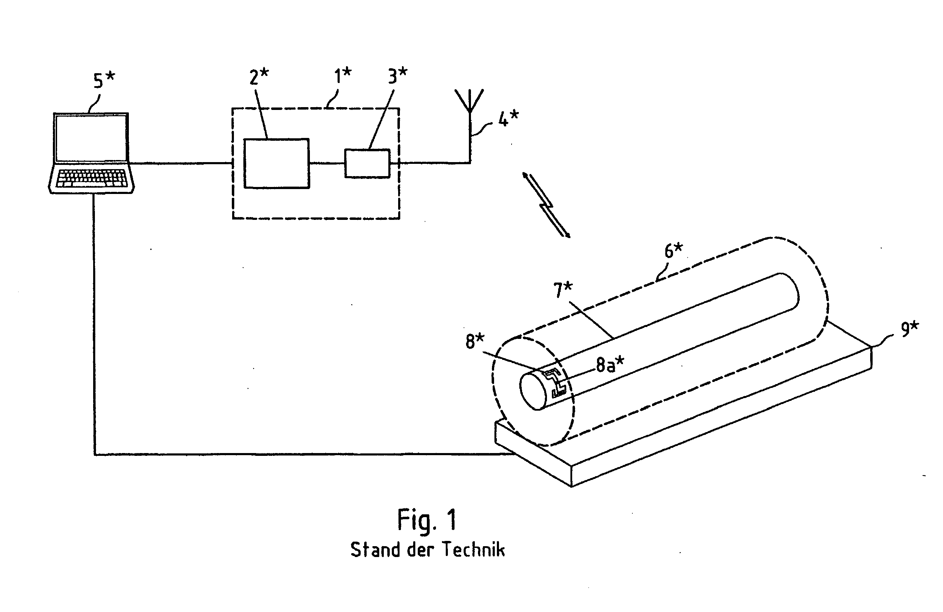

In Fig. 1 ist eine aus dem Stand der Technik bekannte Vorrichtung zum Identifizieren und Markieren von Papierrollen in einem papierverarbeitenden Betrieb in stark schematisierter Form dargestellt.

Die Vorrichtung umfasst eine Schreib-/Leseeinheit 1*, die ihrerseits ein Steuermodul 2* und ein von dem Steuermodul 2* ansteuerbares Sende-/Empfangsmodul 3* umfasst. Das Sende-/Empfangsmodul 3* seinerseits weist eine - hier sehr schematisch dargestellte - Antenne 4* auf, welche mit RFID-Transpondern drahtlos und vorliegend im UHF-Bereich des elektromagnetischen Spektrums kommuniziert.

Im vorliegenden Fall ist der RFID-Transponder 8* in eine Hülse 7* nahe deren Stirnseite eingearbeitet, wobei die Hülse 7* den Kern einer Papierrolle 6* bildet, deren spezifische Informationen hinsichtlich beispielsweise Auftragsnummer, Abnehmer oder Gewicht als beispielsweise zehnstellige Zahl in einem auf dem RFID-Transponder 8* vorgesehenen Speichermodul 8a* gespeichert sind.

Bei der in Fig. 1 dargestellten Vorrichtung ist ferner eine Recheneinheit 5* vorgesehen, welche den Schreib-/Lesevorgang mittels RFID initiieren und auswerten kann. Gleichzeitig ist die Recheneinheit 5* mit einem Sensor, vorliegend einer Waage 9*, verbunden, welche das Gewicht der Papierrolle 6* in einer bestimmten Phase ihres Produktionsprozesses bestimmt.

In bestimmten Anwendungsfällen kann es beispielsweise erforderlich sein, in einem Lesevorgang die auf dem RFID-Transponder 8* gespeicherten spezifischen Produktdaten der Papierrolle 6* auszulesen und auf der Recheneinheit 5* zu speichern. Nach einer Weiterverarbeitung der Papierrolle 6*, im Zuge derer das Papier teilweise abgewickelt werden kann, ändert sich entsprechend das Gewicht der Papierrolle 6*, was durch die Waage 9* ermittelt wird. Das verringerte Gewicht wird sodann von der Waage 9* an die Recheneinheit 5* geleitet, welche ihrerseits über die Vorrichtung 1* einen Schreibvorgang initiiert, bei dem das neue Gewicht auf dem Speichermodul 8a* des RFID-Transponders 8* der Papierrolle 6* abgespeichert wird.

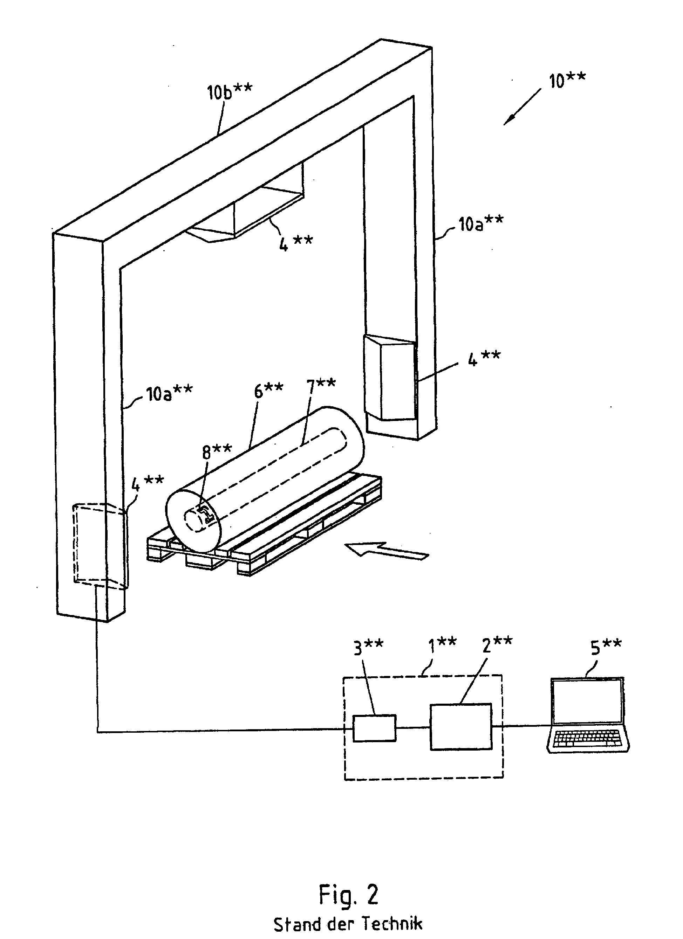

In Fig. 2 ist nun eine Vorrichtung zum Identifizieren und Markieren von Papierrollen, wie sie ebenfalls aus dem Stand der Technik bekannt sind, dargestellt. Die Vorrichtung umfasst wiederum eine Schreib-/Leseeinheit 1**, die ihrerseits ein Steuermodul 2** und ein Sende-/Empfangsmodul 3** umfasst. Die Schreib-/Leseeinheit 1** ist zudem wiederum mit einer Recheneinheit 5** verbunden. Das Sende-/Empfangsmodul 3** ist vorliegend mit drei bevorzugt identischen Antennen 4** verbunden, wobei die Verbindung aus Gründen der Übersichtlichkeit nur für eine der drei Antennen 4** gezeigt ist. Die drei Antennen 4** sind an einem portalähnlichen Gerüst 10** befestigt, wobei an den zwei vertikalen Stützen 10a** des Gerüsts 10** jeweils eine Antenne 4**, die ihrerseits in Richtung des von dem Gerüst 10** definierten Durchgangs ausgerichtet ist, angeordnet ist.

Wird nun eine zu identifizierende und/oder zu markierende Papierrolle 6**, die wiederum in ihrer Hülse 7** nahe der einen Stirnseite einen RFID-Transponder 8** aufweist, durch das Gerüst 10** in Pfeilrichtung transportiert, so kann das Speichermodul des RFID-Transponders 8** der Rolle 6** durch wenigstens eine der drei Antennen 4** ausgelesen oder beschrieben werden. Wird die Rolle 6**, wie vorliegend, in liegendem Zustand transportiert, so erfolgt die Kommunikation über eine der an den vertikalen Stützen 10a** befestigten Antennen 4**. Wird die Papierrolle 6** hingegen aufrecht transportiert, so erfolgt die Kommunikation bevorzugt über die an der Oberseite des Gerüsts 10** hängend angeordnete Antenne 4**.

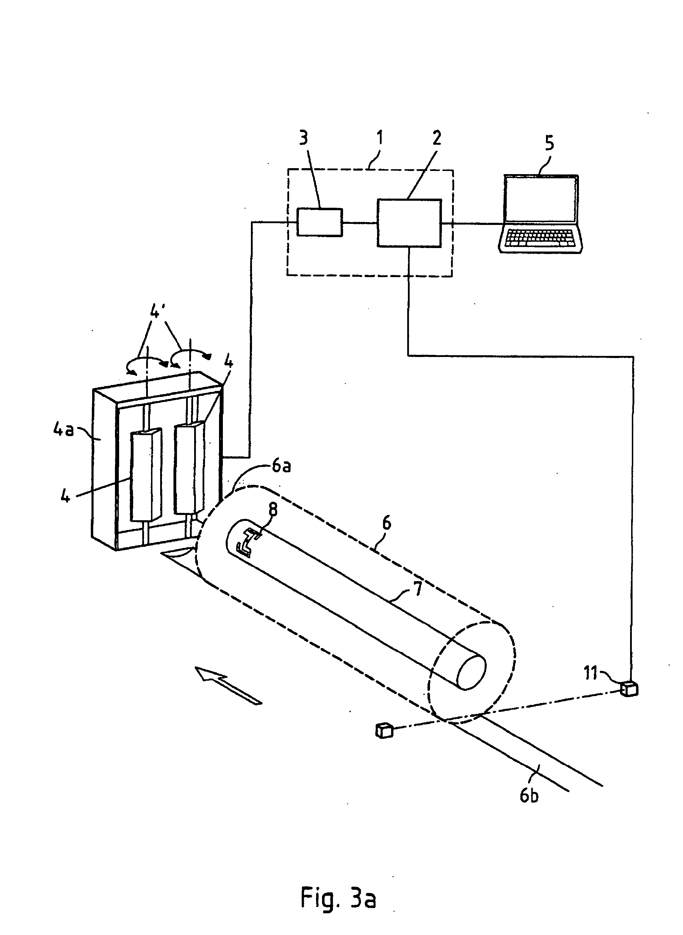

Fig. 3a zeigt nun eine Vorrichtung zum Identifizieren und/oder Markieren von Papierrollen.

Die Vorrichtung umfasst wiederum eine Schreib-/Leseeinheit 1 mit einem Sende-/Empfangsmodul 3, welches von einem Steuermodul 2 ansteuerbar ist. Die Schreib-/Leseeinheitl ist wiederum mit einem Rechner 5 verbunden. Die mit dem Sende-/Empfangsmodul 3 der Schreib-/Leseeinheit 1 verbundenen Antennen sind erfindungsgemäß beweglich angeordnet. Im Einzelnen sind sie derart montiert, dass sie um eine parallel zu ihrer Abstrahlfläche liegende Rotationsachse rotativ beweglich sind. Durch eine nicht im Einzelnen dargestellte Antriebseinheit kann somit beispielsweise eine oszillierende gleich- oder gegensinnige Bewegung der beiden Antennen 4 entsprechend den Pfeilen 4' erfolgen. Durch die Bewegung der Antennen wird erreicht, dass die relative Ausrichtung der Antennen 4 zu dem in der Hülse 7 nahe ihres stirnseitigen Endes vorgesehenen RFID-Transponder 8 über einen weiten Bereich variiert wird. Damit nehmen die Antennen 4 wenigstens zu einem Zeitpunkt eine Position ein, in der die in die Antenne des RFID-Transponders 8 eingekoppelte Energie trotz der Dämpfung durch das aufgewickelte Papier der Papierrolle 6 ausreicht, um nicht nur eine Identifizierung der Papierrolle durch Auslesen des Speichermoduls des RFID-Transponders 8, sondern auch eine Markierung durch Beschreiben desselben mit hoher Betriebssicherheit durchzuführen.

Im Betrieb der Vorrichtung wird die Papierrolle 6 über eine Förderstrecke 6b (Bewegungsbahn) in axialer Richtung auf die Antennen 4 mit ihrer Stirnseite 6a voraus zu bewegt, wobei die Rolle mit einem geringen Abstand von den Antennen 4 (typischerweise < 1 m) in einer Ruheposition verharrt. Beim Passieren der Lichtschrankenstrecke 11 werden die Schreib-/Leseeinheit 1 und mit ihr das Sende-/Empfangsmodul 3 sowie die nicht dargestellte Antriebseinheit der Antennen 4 aktiviert, woraufhin der Lese- und/oder Schreibvorgang beginnt. Ist dieser erfolgreich beendet, so erfolgt der Abtransport der identifizierten und/oder neu markierten Papierrolle 6 in ein Lager beispielsweise mithilfe eines Gabelstaplers (nicht dargestellt).

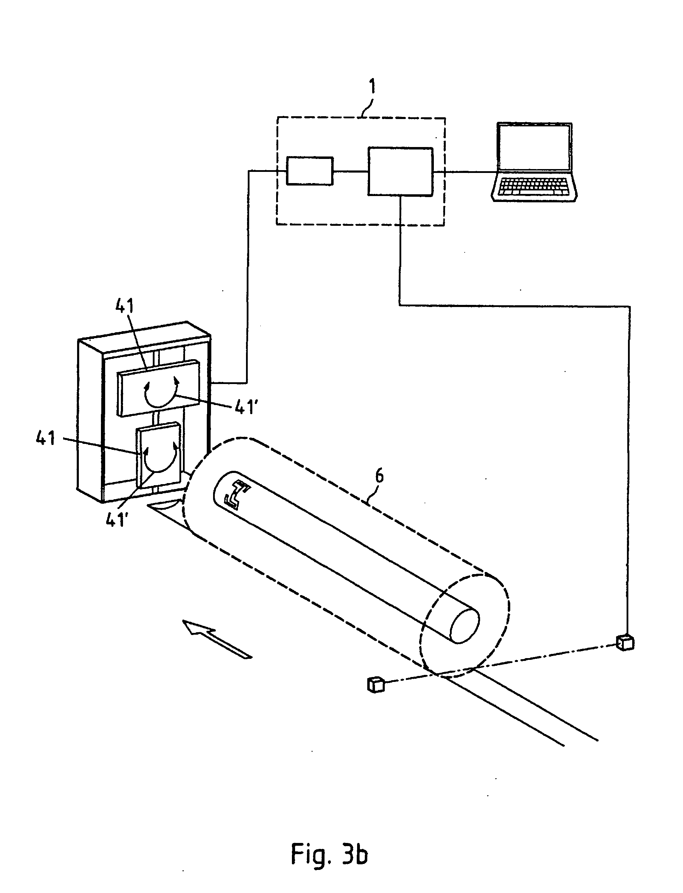

Die in Fig. 3b gezeigte Vorrichtung unterscheidet sich von der aus Fig. 3a dadurch, dass eine geänderte Antennenkonfiguration gewählt ist. So sind die Antennen 41 der Vorrichtung der Fig. 3b um eine im Wesentlichen senkrecht zur Abstrahlfläche der Antennen 41 stehende Rotationsachse rotativ beweglich, wie durch die Pfeile 41' angedeutet. Die Bewegung wird wiederum durch eine nicht dargestellte Antriebseinheit bewerkstelligt. Die Bewegung der Antennen 41 bei Annäherung der Papierrolle 6 kann beispielsweise derart erfolgen, dass die Antennen aus einer ersten Position, in der die obere Antenne den Querschenkel und die untere Antenne den aufrechten Schenkel eines "T" bilden, durch gleichsinnige oder gegensinnige Rotation in eine zweite Position bewegt werden, in der die Antennen 41 insgesamt ein umgedrehtes "T" bilden. Wie auch im Falle der Fig. 3a, ist es infolge der Hochfrequenzübertragung nicht erforderlich, Sichtkontakt zwischen den Antennen 41 und der Stirnseite 6a der Papierrolle 6 herzustellen. Entsprechend können die Antennen 41 ebenso wie die Antennen 4 der Fig. 3a hinter einer schützenden Abdeckung, die für Hochfrequenzstrahlung durchlässig sein muss, angeordnet sein.

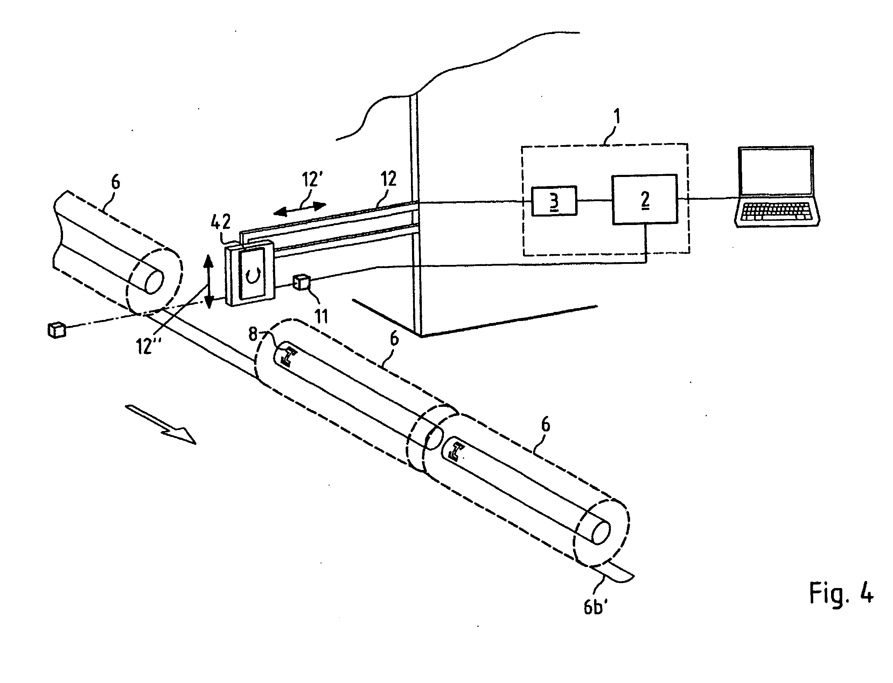

In Fig. 4 ist eine weitere Ausführungsform der erfindungsgemäßen Vorrichtung zum Identifizieren und/oder Markieren eines Objekts, vorliegend wiederum einer Papierrolle 6, dargestellt. In diesem Ausführungsbeispiel umfasst die Vorrichtung eine Positioniereinheit 12 zur Positionierung einer Antenne 42 in der Förderstrecke 6b' der zu identifizierenden und/oder zu markierenden Papierrollen 6. Im Einzelnen ist die Positioniereinheit als ein im Wesentlichen senkrecht zur Förderstrecke 6b' der Papierrollen 6 translatorisch verschiebbarer Ausleger 12 ausgebildet, an dessen freiem Ende die Antenne 42 angeordnet ist. Dadurch kann die ihrerseits durch eine gemeinsam mit der Antenne 42 am freien Ende des Auslegers 12 angeordnete, nicht dargestellte Antriebseinheit rotativ bewegliche Antenne 42

(vgl. Fig. 3b) durch den Auslegerarm 12 in die Förderstrecke 6b' hineingeschoben werden (Pfeil 12') und zusätzlich senkrecht zu dieser Bewegung noch in der Höhe variiert werden (Pfeil 12''). Hierdurch ergibt sich eine aus zwei translatorischen Bewegungen und einer rotatorischen Bewegung resultierende Antennenbewegung, die eine besonders zuverlässige Identifizierung und Markierung der Papierrollen durch Auslesen und Beschreiben des Speichermoduls des RFID-Transponders 8 der Papierrollen 6 ermöglicht.

Im Betrieb der Vorrichtung werden die einzelnen jeweils mit einem RFID-Transponder 8 in der Hülse 7 versehenen Papierrollen 6 entlang der Förderstrecke 6b' in der durch den perspektivisch dargestellten Transportpfeil markierten Richtung bewegt. Durch Passieren der-Lichtschrankenanordnung 11 wird die Vorrichtung aktiviert, und zwar in der Weise, dass die Papierrolle 6 vollständig an dem noch eingeschobenen Auslegerarm 12 vorbei gefördert wird und in der Position der mittleren der drei Papierrollen 6 verharrt. Anschließend wird der Auslegerarm 12, wie durch den Pfeil 12' angedeutet, in die Förderstrecke 6b' der Papierrollen 6 herausgeschoben, und die Antenne 42 wird durch die nicht dargestellte Antriebseinheit rotativ bewegt, wie im Zusammenhang mit Fig. 3b bereits beschrieben. Durch diese Antennenbewegung wird bereits eine zuverlässige Kommunikation mit dem nahe der rückseitigen Stirnseite der Papierrollen 6 jeweils angeordneten RFID-Transponder 8 ermöglicht. Falls insbesondere der Schreibvorgang nicht unmittelbar erfolgreich abgeschlossen werden kann, ist es möglich, die Antenneneinheit senkrecht zur Förderstrecke 6b' und zur Verschieberichtung 12' des Auslegerarms 12 translatorisch entlang des Pfeils 12", d.h. nach oben, zu bewegen, um einen weiteren Bewegungsfreiheitsgrad auszunutzen. Hierdurch wird die Betriebssicherheit insbesondere beim Beschreiben des Speichermoduls der RFID-Transponder 8 der Papierrollen 6 weiter erhöht. Die markierten Papierrollen 6 können dann beispielsweise in Chargen von jeweils drei Rollen verladen und zum Abnehmer transportiert werden.

Alternativ zu einer einzelnen rotativ beweglichen Antenne 42 ist es möglich, am freien Ende des Auslegerarms 12 zwei übereinander angeordnete rotativ bewegliche Antennen nach dem Vorbild der Fig. 3b vorzusehen (nicht dargestellt). Durch die hierdurch verbesserte Auslesbarkeit bzw. Beschreibbarkeit des Transponders 8 kann in der Regel auf eine vertikale Verstellbarkeit der Antenneneinheit verzichtet werden.

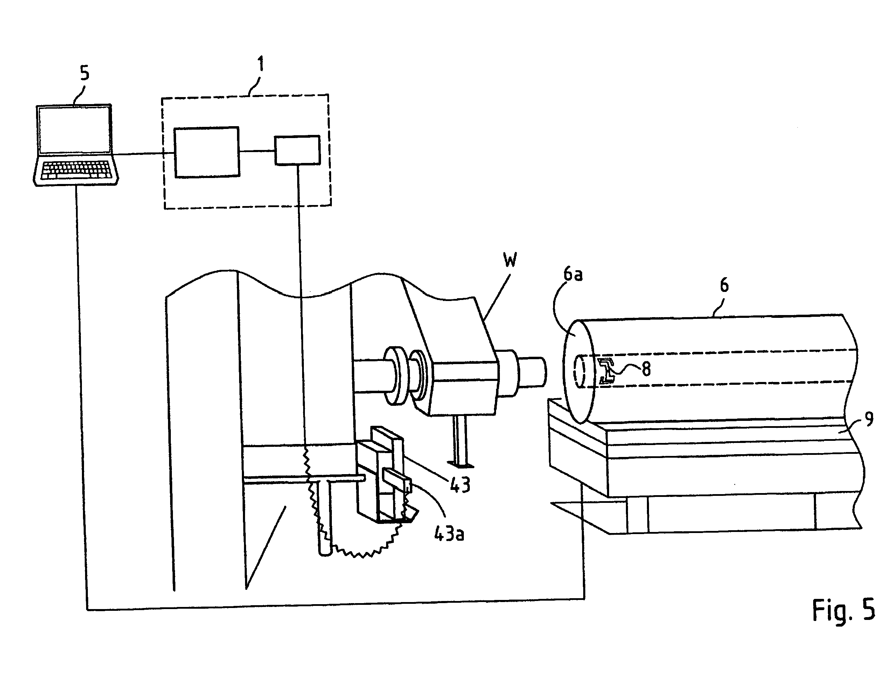

In Fig. 5 ist eine weitere Ausgestaltung der Vorrichtung zum Identifizieren und/oder Markieren von Papierrollen mittels RFID dargestellt. Die Vorrichtung umfasst wiederum eine Schreib-/Leseeinheit 1, die über ihr Sende-/Empfangsmodul mit einer beweglich angeordneten Antenne 43 verbunden ist. Bei dieser Ausgestaltung der erfindungsgemäßen Vorrichtung wird die Antennenbewegung nicht durch eine Antriebseinheit, sondern durch die Möglichkeit bewerkstelligt, dass ein Maschinenbediener die Antenne 43 über einen Griff 43a ergreift und die Antennenbewegung gegenüber dem RFID-Transponder 8 der Papierrolle 6 manuell erzeugt.

Im vorliegenden Ausführungsbeispiel wird eine Papierrolle 6 auf eine zunächst im Boden versenkte, mit einer Wägeeinheit 9 versehene Hubvorrichtung gerollt. Sodann wird über die Antenne 43 das Speichermodul des RFID-Transponders 8 der Rolle 6 ausgelesen, um die für die Weiterverarbeitung wichtigen Informationen zu der Papierrolle, wie z.B. Auftragsnummer, Abnehmer, Rollengewicht etc., zu erhalten. Ist der Lesevorgang nicht erfolgreich, so nimmt ein Maschinenbediener die Antenne 43 aus der Halterung und bewegt sie vor der Stirnseite 6a der Rolle 6. Durch die Antennenbewegung kann der Lesvorgang, wie oben beschrieben, mit besonders hoher Betriebssicherheit durchgeführt werden.

Sodann wird die Hubvorrichtung betätigt und die Rolle 6 der schematisch angedeuteten Wickelmaschine W zugeführt. Nach teilweisem Abwickeln des Papiers wird die Papierrolle 6 wieder durch die Hubvorrichtung aufgenommen, und die Wägeeinheit bestimmt das neue Gewicht und leitet dies an den Rechner 5 weiter. Der Rechner 5 initiiert sodann einen Schreibvorgang, im Rahmen dessen das Speichermodul des RFID-Transponders 8 der Papierrolle 6 mit der das neue Gewicht betreffenden Information beschrieben wird. Dies kann zunächst mit unbewegter Antenne 43 erfolgen. Falls dies nicht erfolgreich ist, kann wiederum der Maschinenbediener die Antenne 43 manuell bewegen, so dass der Schreibvorgang dann erfolgreich abgeschlossen werden kann.

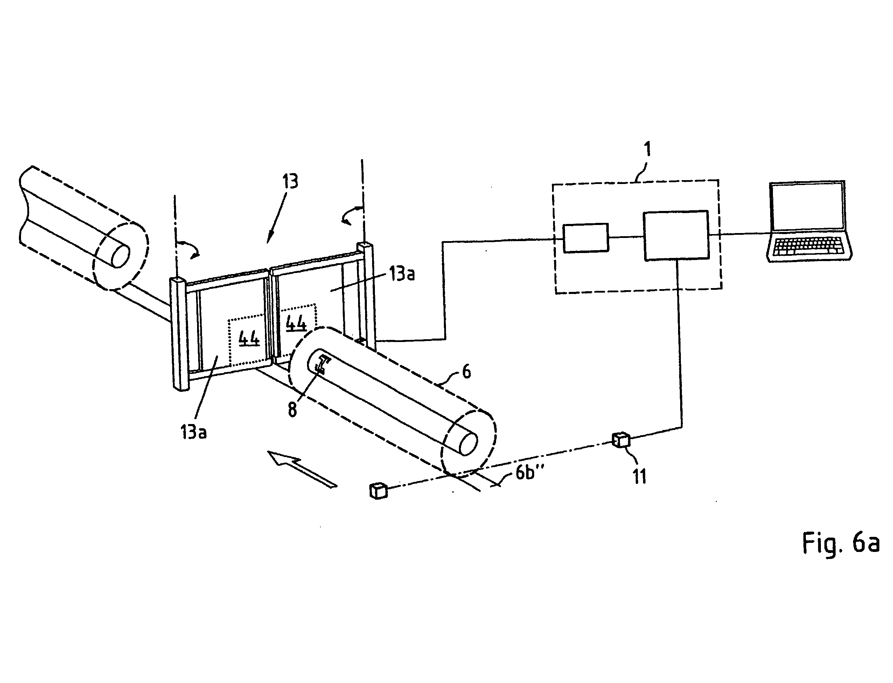

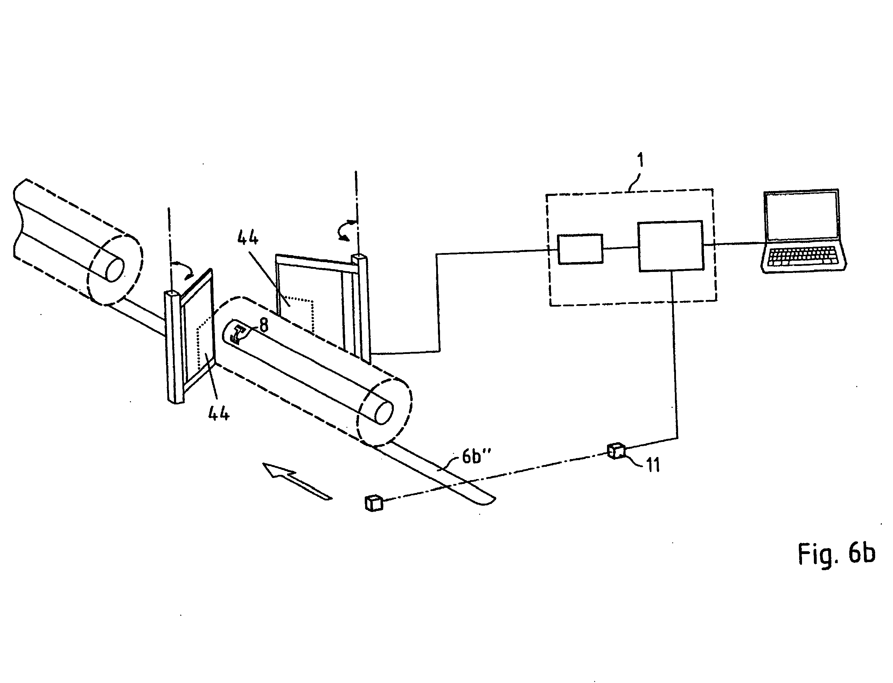

In den Figuren 6a, 6b ist nun eine weitere besonders vorteilhafte Ausgestaltung der Vorrichtung zum Identifizieren und/oder Markieren von Objekten, vorliegend wiederum Papierrollen 6, dargestellt.

Bei der in den Figuren 6a, 6b dargestellten Vorrichtung sind die Antennen 44 fest auf den beiden Flügeln 13a einer Doppelschwingtür 13 angeordnet. Die Flügel 13a der Doppelschwingtür 13, die sich in der Förderstrecke 6b " der Papierrollen 6 befinden, können nun allein durch die fortgesetzte Transportbewegung der Papierrollen 6 aufgestoßen werden, wobei sich die fest montierten Antennen 44' mit den Flügeln 13a der Doppelschwingtür 13 schwingend mitbewegen, wodurch die Antennenbewegung relativ zu dem RFID-Transponder 8 der zu identifizierenden und/oder zu markierenden Papierrolle 6 bewerkstelligt wird.

In Fig. 6b ist hierzu gezeigt, wie die Flügel 13a der Doppelschwingtür 13 im dann verschwenkten Zustand an der durch den von der Doppelschwingtür 13 definierten Durchgang transportierten Rolle 6 entlanggleiten, wobei in besonders bevorzugter Weise die vertikalen Außenkanten der Türflügel 13a jeweils eine Walze aufweisen können, so dass es nicht zu einer Reibung zwischen der Außenfläche der Papierrolle und den Außenkanten der Türflügel 13a kommt, welche die Papieroberfläche beschädigen könnte. Die Aktivierung der Schreib-/Leseeinheit 1 erfolgt wiederum durch eine in Transportrichtung der Papierrolle 6 vor der Doppelschwingtür 13 angeordnete Lichtschrankenanordnung 11. Es ist somit durchaus möglich, dass der Lese- oder Schreibvorgang bereits erfolgreich abgeschlossen ist, bevor die Doppelschwingtür 13 durch die vorrückende Rolle 6 betätigt wird. In jedem Falle wird ein valider Schreib-/Lesevorgang durch Bewegen der Antennen 44 durch das Aufstoßen der Schwingtürflügel 13a ermöglicht.

Die Türflügel 13a der Doppelschwingtür 13 können mit einer Mechanik versehen sein (nicht im Einzelnen dargestellt), mittels derer sie beim Aufschwingen angehoben werden, um so eine Rückstellkraft zum Zurückschwingen in die Nulllage zu generieren. Um ein Zurückschwingen der Türflügel 13a über die in Fig. 6a gezeigte Nulllage hinaus zu verhindern, können die Türen an ihren Scharnieren mit einer entsprechenden Stoppvorrichtung versehen sein.

Es versteht sich bei dem Ausführungsbeispiel der Fig. 6a, 6b, dass anstelle zweier Türflügel 13a auch ein einziger Türflügel mit fest auf dem Türflügel angeordneter Antenne vorgesehen sein kann (nicht dargestellt). Ebenso versteht es sich, dass die auf dem oder den Türflügeln angeordnete Antenne zusätzlich noch rotativ beweglich ausgebildet sein kann (ebenfalls nicht dargestellt), um die Betriebssicherheit beim Schreib-/Lesevorgang noch weiter zu erhöhen.

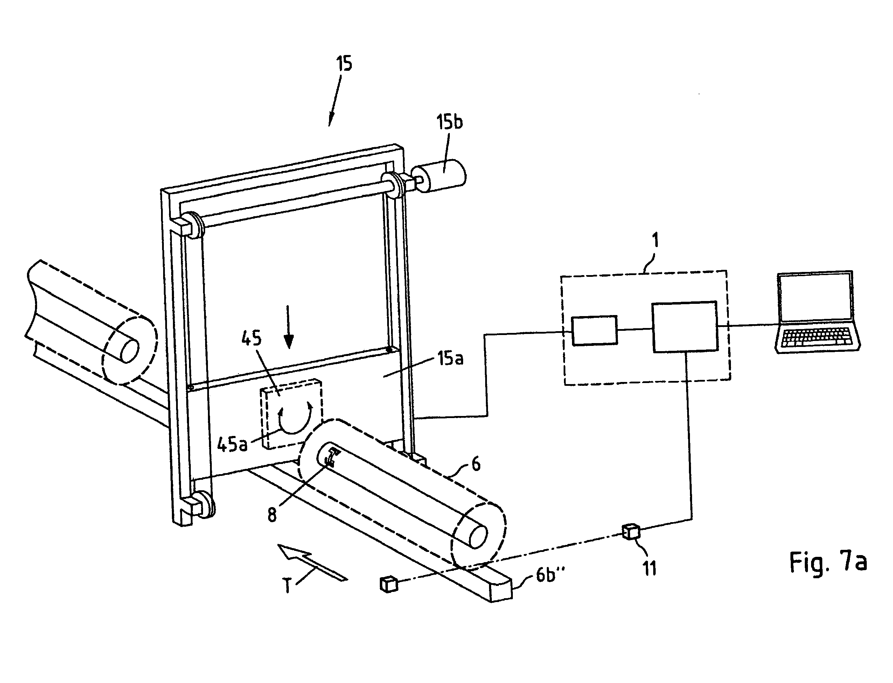

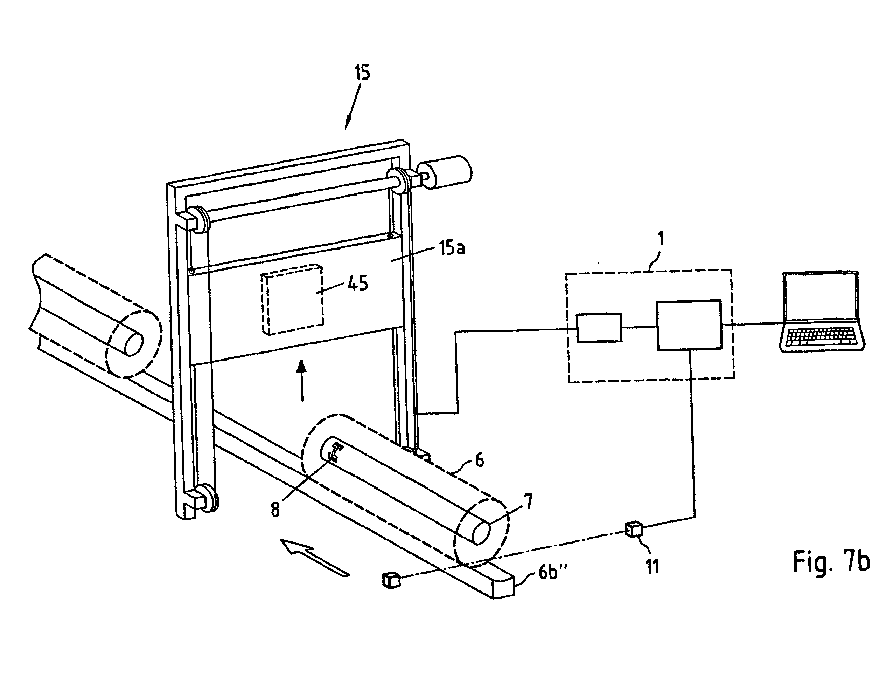

In Fig. 7 ist eine weitere Ausführungsform der Vorrichtung zum Identifizieren und/oder Markieren von Objekten, vorliegend wiederum Papierrollen 6, dargestellt. Diese umfasst, ähnlich wie die im Zusammenhang mit Fig. 4 beschriebene Ausführungsform, eine Positioniereinheit 15 zur Positionierung einer Antenne 45 in der Förderstrecke 6b " der Papierrollen 6. Vorliegend ist die Positioniereinheit als Rahmenkonstruktion 15 mit einem innerhalb der Rahmenkonstruktion 15 und in die Bewegungsbahn der zu identifizierenden und/oder zu markierenden Papierrolle 6 bewegbaren Segment 15a ausgebildet ist, wobei die Antenne 45 an dem Segment 15a angeordnet ist. Die Rahmenkonstruktion 15 der Fig. 7 mit dem darin beweglichen Segment 15a ähnelt vorliegend einem Torrahmen mit darin vertikal beweglichem Sektionaltorsegment, kann selbstverständlich auch in anderer Weise konstruiert sein.

Durch die vertikale Aufwärts- und Abwärtsbewegung des Segmentes 15a wird bereits eine Antennenbewegung relativ zu der zu identifizierenden und/oder zu markierenden Papierrolle 6 bewirkt, so dass allein durch diese Bewegung der Markierungs- oder Identifizierungsvorgang mit hoher Betriebssicherheit durchgeführt werden kann. Zusätzlich kann, wie durch den Pfeil 45a in Fig. 7a angedeutet, eine Rotation der Antenne 45 um eine senkrecht zur Abstrahlfläche der Antenne 45 stehende Rotationsachse erfolgen. Diese wird durch eine gemeinsam mit der Antenne 45 in einem freien Volumen des hohl ausgebildeten Segments 15a angeordnete Antriebseinheit (nicht dargestellt) bewirkt.

Im Betrieb der Vorrichtung der Fig. 7 werden die einzelnen jeweils mit einem RFID-Transponder 8 in der Hülse 7 versehenen Papierrollen 6 entlang der Förderstrecke 6b " in der durch den perspektivisch dargestellten Transportpfeil T markierten Richtung bewegt. Wenn eine zu identifizierende und/oder zu markierende Rolle 6 eine Lichtschrankenanordnung 11 passiert, wird der Transport der Papierrolle 6 derart verzögert unterbrochen, dass die Papierrolle mit der Stirnseite, in deren Nähe der RFID-Transponder 8 angeordnet ist, unmittelbar vor dem Rahmen 15 verharrt. Gleichzeitig wird die Vorrichtung in der Weise aktiviert, dass das Segment 15a aus einer oberen Ruheposition (Fig. 7b) mittels eines durch einen Elektromotor 15b betriebenen Seilzugs in eine untere Position (Fig. 7a) bewegt wird, womit eine translatorische Bewegung der Antenne 45 relativ zum RFID-Transponder 8 bewirkt wird. Zusätzlich zu dieser Vertikalbewegung bewirkt die Antriebseinheit der Antenne 45 eine Rotation derselben entsprechend Doppelpfeil 45a. Durch diese Antennenbewegung wird eine zuverlässige Kommunikation mit dem RFID-Transponder 8 ermöglicht. Sollte ein valide Identifizierung oder Markierung nicht erfolgt sein, kann die Translationsbewegung der Antenne 45 mit dem Segment 15a sowie die Rotationsbewegung wiederholt werden.

Ist die Identifizierung und/oder Markierung erfolgreich abgeschlossen, so bewegt sich das Segment 15a mit der Antenne 45 - es versteht sich, das in dem Segment auch mehr als eine Antenne untergebracht sein können - wieder in die obere Ruheposition (Fig. 7b) und die Papierrolle 6 kann durch den Rahmen 15 transportiert und beispielsweise einer Verpackungsstation zugeführt werden. Sodann steht die Vorrichtung für einen erneuten Identifizierungs- und/oder Markierungsvorgang zur Verfügung.

## Patentansprüche

1. Vorrichtung zum Identifizieren und/oder Markieren von Objekten (6) mittels RFID
- mit einer Lese- oder Schreib-/Leseeinheit (1) zum drahtlosen Auslesen und/oder Beschreiben einer Speichereinheit (8a) eines mit dem zu identifizierenden und/oder zu markierenden Objekt (6) verbundenen RFID-Transponders (8),
- wobei die Lese- oder Schreib-/Leseeinheit (1) ein wenigstens eine Antenne (4, 41, 42, 43, 44) aufweisendes Sende-/Empfangsmodul (3) umfasst,
- Mittel zur Bewegung einer Antenne (4, 41, 42, 43, 44) während drahtlosen Auslesen und/oder Beschreiben einer Speichereinheit eines RFID - Transponders.
**dadurch gekennzeichnet, dass** Mittel (11) zur Detektion eines zu identifizierenden und/oder zu markierenden Objekts (6) vorgesehen sind, wobei die Mittel (11) mit der Lese- oder Schreib-/Leseeinheit derart gekoppelt sind, dass bei Detektion eines Objekts die Lese- oder Schreib-/Leseeinheit aktiviert wird.

2. Vorrichtung nach Anspruch 1,
**dadurch gekennzeichnet, dass** die wenigstens eine Antenne (4, 41, 42, 43, 44) rotativ beweglich angeordnet ist.

3. Vorrichtung nach Anspruch 2,
**dadurch gekennzeichnet, dass** die wenigstens eine Antenne (41, 42, 43)eine Abstrahlfläche aufweist und um eine im Wesentlichen
senkrecht zur Abstrahlfläche stehende Rotationsachse rotativ beweglich ist.

4. Vorrichtung nach Anspruch 2 oder 3,
**dadurch gekennzeichnet, dass** die wenigstens eine Antenne (4, 42, 43, 44)eine Abstrahlfläche aufweist und um eine im Wesentlichen parallel zur Abstrahlfläche liegende Rotationsachse rotativ beweglich ist.

5. Vorrichtung nach einem der Ansprüche 1 bis 4, **dadurch gekennzeichnet, dass** die wenigstens eine Antenne (42, 43) translationsbeweglich angeordnet ist.

6. Vorrichtung nach Anspruch 5,
**dadurch gekennzeichnet, dass** die wenigstens eine Antenne (42, 43) eine Abstrahlfläche aufweist und entlang einer im Wesentlichen parallel zur Abstrahlfläche liegenden Achse translationsbeweglich angeordnet ist.

7. Vorrichtung nach einem der Ansprüche 1 bis 6,
**dadurch gekennzeichnet, dass** die Detektionsmittel als Lichtschrankenanordnung (11) ausgebildet sind.

8. Vorrichtung nach einem der Ansprüche 1 bis 7,
**dadurch gekennzeichnet, dass** die Vorrichtung eine Antriebseinheit zur Bewegung der wenigstens einen Antenne (4, 41, 42, 44) umfasst.

9. Vorrichtung nach Anspruch 8,
**dadurch gekennzeichnet, dass** die Antriebseinheit zur Bewegung der wenigstens einen Antenne (4, 41, 42, 44) und die Lese- oder Schreib-/Leseeinheit derart gekoppelt sind, dass bei Aktivierung der Lese- oder Schreib-/Leseeinheit die Antriebseinheit zur Erzeugung der Bewegung der wenigstens einen Antenne (4, 41, 42, 44) aktiviert wird.

10. Vorrichtung nach Anspruch 8 oder 9,
**dadurch gekennzeichnet, dass** die Antriebseinheit als Elektromotor mit vorgeschaltetem Getriebe ausgebildet ist.

11. Vorrichtung nach einem der Ansprüche 1 bis 10,
**dadurch gekennzeichnet, dass** die Vorrichtung eine Positioniereinheit (12) zur Positionierung der wenigstens einen Antenne (42) in der Bewegungsbahn (6b') eines zu identifizierenden und/oder zu markierenden Objekts (6) umfasst.

12. Vorrichtung nach Anspruch 11,
**dadurch gekennzeichnet, dass** die Positioniereinheit als translatorisch in die Bewegungsbahn verschiebbarer Ausleger (12) ausgebildet ist, an dessen freiem Ende die wenigstens eine Antenne (42) angeordnet ist.

13. Vorrichtung nach Anspruch 12 und Anspruch 8,
**dadurch gekennzeichnet, dass** die wenigstens eine Antenne (42) gemeinsam mit der Antriebseinheit an dem freien Ende des Auslegers (12) angeordnet sind.

14. Vorrichtung nach Anspruch 11,
**dadurch gekennzeichnet, dass** die Positioniereinheit als Rahmenkonstruktion (15) mit wenigstens einem innerhalb der Rahmenkonstruktion (15) und in die Bewegungsbahn eines zu identifizierenden und/oder zu markierenden Objekts (6) bewegbaren Segment (15a) ausgebildet ist, wobei die wenigstens eine Antenne (45) an dem Segment (15a) angeordnet ist.

15. Vorrichtung nach einem der Ansprüche 14 und 8,
**dadurch gekennzeichnet, dass** die wenigstens eine Antenne (45) gemeinsam mit der Antriebseinheit in einem inneren Volumen des Segments (15a) angeordnet ist, wobei die Antriebseinheit ausgebildet ist, um eine Rotation der wenigstens einen Antenne (45) zu bewirken.

16. Vorrichtung nach einem der Ansprüche 1 bis 7,
**dadurch gekennzeichnet, dass** die wenigstens eine Antenne (44) derart in der Bewegungsbahn (6b") eines zu identifizierenden und/oder zu markierenden Objekts angeordnet ist, dass die Antennenbewegung durch das bewegte Objekt (6) erzeugbar ist.

17. Vorrichtung nach Anspruch 16,
**dadurch gekennzeichnet, dass** die wenigstens eine Antenne (44) derart schwenkbar angeordnet ist, dass sie durch ein zu identifizierendes und/oder zu markierendes Objekt (6) aus dessen Bewegungsbahn (6b") nach Art einer Schwingtür (13) herausschwenkbar ist.

18. Vorrichtung nach einem der Ansprüche 1 bis 17,
**dadurch gekennzeichnet, dass** die Vorrichtung zur Identifizierung eines Objekts zusätzlich einen Barcode-Scanner aufweist.

19. Verfahren zum Identifizieren und/oder Markieren eines Objekts mittels RFID unter Verwendung einer Vorrichtung nach einem der Ansprüche 1 bis 18,
**gekennzeichnet durch** folgende Schritte:
- Aktivieren der Lese- oder Lese- oder Schreib-Leseeinheit (1) bei Annäherung eines zu identifizierenden und/oder zu markierenden Objekts,
- Bewegen der wenigstens einen Antenne (4, 41, 42, 43, 44) und gleichzeitiges Identifizieren und/oder Markieren des Objekts (6)durch Auslesen und/oder Beschreiben der Speichereinheit (8a) des RFID-Transponders (8),
- wobei Mittel (11) zur Detektion eines zu identifizierenden und/oder zu markierenden Objekts (6) vorgesehen sind und mit der Lese- oder Schreib-/Leseeinheit derart gekoppelt sind, dass bei Detektion eines Objekts die Lese- oder Schreib-/Leseeinheit aktiviert wird.

20. Verfahren nach Anspruch 19,
**dadurch gekennzeichnet, dass** die wenigstens eine Antenne (4, 41, 42) durch eine Antriebseinheit bewegt wird.

21. Verfahren nach Anspruch 19,
**dadurch gekennzeichnet, dass** die wenigstens eine Antenne (43) durch einen Maschinenbediener bewegt wird.

22. Verfahren nach Anspruch 19,
**dadurch gekennzeichnet, dass** die wenigstens eine Antenne (44) durch das zu identifizierende und/oder zu markierende Objekt bewegt wird.

## Claims

1. An Apparatus for identifying and/or marking objects (6) by means of RFID
- with a reading or writing/reading unit (1) for wirelessly reading from and/or writing to a storage unit (8a) of a RFID transponder (8) connected with an object (6) to be identified and/or marked,
- wherein the reading or writing/reading unit (1) includes a transmitting/receiving module (3) comprising at least one antenna (4, 41, 42, 43, 44),
- with means for moving an antenna (4, 41, 42, 43, 44) whilst wirelessly reading from and/or writing to a storage unit of a RFID transponder,
**characterised in that**
means (11) for detecting an object (6) to be identified and/or marked are provided, which means (11) are coupled with the reading or writing/reading unit (1) such that when an object is detected, the reading or writing/reading unit is activated.

2. The apparatus according to claim 1, **characterised in that** the at least one antenna (4, 41, 42, 43, 44) is rotatably movably arranged.

3. The apparatus according to claim 2, **characterised in that** the at least one antenna (41, 42, 43) comprises a radiating surface and is rotatably movable about a rotary axis substantially vertical to the radiating surface.

4. The apparatus according to claim 2 or 3, **characterised in that** the at least one antenna (4, 42, 43, 44) comprises a radiating surface and is rotatably movable about a rotary axis substantially parallel to the radiating surface.

5. The apparatus according to one of claims 1 to 4, **characterised in that** the at least one antenna (42, 43) is arranged so as to be translationally movable.

6. The apparatus according to claims 5, **characterised in that** the at least one antenna (42, 43) comprises a radiating surface and is arranged so as to be translationally movable along an axis substantially parallel to the radiating surface.

7. The apparatus according to one of claims 1 to 6, **characterised in that** the detection means are implemented as a photoelectric barrier arrangement (11).

8. The apparatus according to one of claims 1 to 7, **characterised in that** the apparatus includes a drive unit for moving the at least one antenna (4, 41, 42, 44).

9. The apparatus according to claim 8, **characterised in that** the drive unit for moving the at least one antenna (4, 41, 42, 44) and the reading or writing/reading unit (1) are coupled such that when the reading or writing/reading unit (1) is activated the drive unit is activated for generating the movement of the at least one antenna (4, 41, 42, 44).

10. The apparatus according to claim 8 or 9, **characterised in that** the drive unit is implemented as an electric motor with preceding gear.

11. The apparatus according to one of claims 1 to 10, **characterised in that** the apparatus includes a positioning unit (12) for positioning the at least one antenna (42) in the movement path (6b') of an object (6) to be identified and/or marked.

12. The apparatus according to claim 11, **characterised in that** the positioning unit is implemented as a cantilever (12) which is translationally movable into the trajectory, the free end of which has the at least one antenna (42) arranged on it.

13. The apparatus according to claims 12 and 8, **characterised in that** the at least one antenna (42) is arranged, together with the drive unit, at the free end of the cantilever (12).

14. The apparatus according to claim 11, **characterised in that** the positioning unit is implemented as a frame structure (15) with at least one segment (15a) within the frame structure (15), which segment is movable into the trajectory of an object (6) to be identified and/or marked, wherein the at least one antenna (45) is arranged on the segment (15a).

15. The apparatus according to one of claims 14 and 8, **characterised in that** the at least one antenna (45) is arranged together with the drive unit in an inner volume of the segment (15a), wherein the drive unit is designed to cause a rotation of the at least one antenna (45).

16. The apparatus according to one of claims 1 to 7, **characterised in that** the at least one antenna (44) is arranged in the trajectory (6b") of an object to be identified and/or marked such that the antenna movement can be generated by the object (6) being moved.

17. The apparatus according to claim 16, **characterised in that** the at least one antenna (44) is pivotably arranged such that it can be pivoted by an object (6) to be identified and/or marked out of the trajectory (6b") of same in the manner of a swing door (13).

18. The apparatus according to one of claims 1 to 17, **characterised in that** the apparatus additionally comprises a barcode scanner for identifying an object.

19. A method for identifying and/or marking an object by means of RFID using an apparatus according to one of claims 1 to 18, **characterised by** the following steps:
- activating the reading or writing/reading unit (1) as an object to be identified and/or marked approaches,
- moving the at least one antenna (4, 41, 42, 43, 44) and at the same time identifying and/or marking the object (6) by reading from and/or writing to the storage unit (8a) of the RFID transponder (8),
- wherein means (11) for detecting an object (6) to be identified and/or marked are provided and coupled with the reading or writing/reading unit (1) such that upon detection of an object the reading or writing/reading unit (1) is activated.

20. The method according to claim 19, **characterised in that** the at least one antenna (4, 41, 42) is moved by a drive unit.

21. The method according to claim 19, **characterised in that** the at least one antenna (43) is moved by a machine operator.

22. The method according to claim 19, **characterised in that** the at least one antenna (44) is moved by the object to be identified and/or marked.

## Revendications

1. Dispositif d'identification et/ou marquage d'objets (6) au moyen de RFID,
- comportant une unité de lecture ou d'écriture/lecture (1) pour une lecture de signaux et/ou inscription sans fil d'une unité de mémoire (8a) d'un transpondeur RFID (8) relié à un objet (6) à identifier et/ou à marquer,
- dans lequel l'unité de lecture ou d'écriture/lecture (1) comprend un module d'émission/réception (3) présentant au moins une antenne (4,41,42,43,44),
- comportant des moyens pour déplacer une antenne (4,41,42,43,44) pendant une lecture de signaux et/ou inscription sans fil d'une unité de mémoire d'un transpondeur RFID,
**caractérisé en ce que** des moyens (11) de détection d'un objet (6) à identifier et/ou à marquer sont prévus, dans lequel les moyens sont couplés à l'unité de lecture ou d'écriture/lecture de telle sorte que lors de la détection d'un objet l'unité de lecture ou d'écriture/lecture est activée.

2. Dispositif selon la revendication 1, **caractérisé en ce que** au moins une antenne (4,41,42,43) est disposée de manière mobile rotativement.

3. Dispositif selon la revendication 2, **caractérisé en ce que** au moins une antenne (41,42,43) présente une surface de rayonnement et est mobile rotativement autour d'un axe de rotation dressé essentiellement verticalement à la surface de rayonnement.

4. Dispositif selon les revendications 2 ou 3, **caractérisé en ce que** au moins une antenne (4,42,43,44) présente une surface de rayonnement et est mobile rotativement autour d'un axe de rotation situé essentiellement parallèlement à la surface de rayonnement.

5. Dispositif selon une des revendications 1 à 4, **caractérisé en ce que** au moins une antenne (42,43) de disposée de manière mobile par translation.

6. Dispositif selon la revendication 5, **caractérisé en ce que** au moins une antenne (42,43) présente une surface de rayonnement et est disposée de manière mobile par translation le long d'un axe situé essentiellement parallèlement à la surface de rayonnement.

7. Dispositif selon une des revendications 1 à 6, **caractérisé en ce que** les moyens de détection sont conçus comme un dispositif de barrage photo-électrique (11).

8. Dispositif selon une des revendications 1 à 7, **caractérisé en ce que** le dispositif comprend une unité d'entraînement pour déplacer une antenne (4,41,42,43).

9. Dispositif selon la revendication 8, **caractérisé en ce que** l'unité d'entraînement pour déplacer au moins une antenne (4,41,42,43) et l'unité de lecture ou d'écriture/lecture sont couplées de telle sorte que lors de l'activation de l'unité de lecture ou d'écriture/lecture l'unité d'entraînement est activée pour produire le mouvement d'au moins une antenne (4,42,42,43).

10. Dispositif selon les revendications 8 ou 9, **caractérisé en ce que** l'unité d'entraînement est conçue comme un moteur électrique avec des transmissions branchées en aval.

11. Dispositif selon une des revendications 1 à 10, **caractérisé en ce que** le dispositif comprend une unité de positionnement (12) pour positionner au moins une antenne (42) dans le trajet de mouvement (6b') d'un objet (6) à identifier et/ou à marquer.

12. Dispositif selon la revendication 11, **caractérisé en ce que** l'unité de positionnement est conçue comme une potence (12) déplaçable dans le trajet de mouvement, à l'extrémité libre de laquelle au moins une antenne (42) est disposée.

13. Dispositif selon les revendications 12 et 8, **caractérisé en ce que** au moins une antenne (42) est disposée conjointement à l'unité d'entraînement sur l'extrémité libre de la potence (12).

14. Dispositif selon la revendication 11, **caractérisé en ce que** l'unité de positionnement est conçue comme une construction de châssis (15) avec au moins un segment (15a) déplaçable à l'intérieur de la construction de châssis (15) et dans le trajet de mouvement d'un objet (6) à identifier et/ou à marquer, dans lequel au moins une antenne (45) est disposée sur le segment (15a).

15. Dispositif selon une des revendications 14 et 8, **caractérisé en ce que** au moins une antenne (45) est disposée conjointement à l'unité d'entraînement dans un volume interne du segment (15a), dans lequel l'unité d'entraînement est conçue afin de provoquer une rotation d'au moins une antenne (45).

16. Dispositif selon une des revendications 1 à 7, **caractérisé en ce que** au moins une antenne (44) est disposée dans le trajet de mouvement (6b") d'un objet à identifier et/ou à marquer, de telle sorte que le mouvement d'antenne puisse être produit par l'objet déplacé (6).

17. Dispositif selon la revendication 16, **caractérisé en ce que** au moins une antenne (44) est disposée de manière basculante de telle sorte qu'elle puisse être basculée hors de son trajet de mouvement (6b") à la manière d'une porte battante (13) au moyen d'un objet (6) à identifier et/ou à marquer.

18. Dispositif selon une des revendications 1 à 17, **caractérisé en ce que** le dispositif d'identification d'objet présente au moins un lecteur de codes-barres.

19. Procédé d'identification et/ou marquage d'un objet au moyen du RFID en utilisant un dispositif selon une des revendications 1 à 18, **caractérisé par** les étapes suivantes :
- activer l'unité de lecture ou d'écriture/lecture (1) quand un objet à identifier et/ou à marquet se rapproche,
- déplacer au moins une antenne (4,41,42,43,44) et identifier et/ou marquer simultanément l'objet (6) en lisant les signaux et/ou inscrivant l'unité de mémoire (8a) du transpondeur RFID,
- dans lequel des moyens (11) de détection d'objet (6) à identifier et/ou à marquer sont prévus et sont couplés à l'unité de lecture ou d'écriture/lecture de telle sorte que lors de la détection d'un objet l'unité de lecture ou d'écriture/lecture est activée.

20. Procédé selon la revendication 19, **caractérisé en ce que** au moins une antenne (4,41,42) est déplacée par une unité d'entraînement.

21. Procédé selon la revendication 19, **caractérisé en ce que** au moins une antenne (43) est déplacée par un opérateur de machine.

22. Procédé selon la revendication 19, **caractérisé en ce que** au moins une antenne (44) est déplacée par l'objet à identifier et/ou à marquer.
